# EUROPEAN PATENT SPECIFICATION

(11) **EP 0 810 263 B1**
(45) Date of publication and mention of the grant of the patent: **10.01.2001**
(21) Application number: 97201574.7
(22) Date of filing: 28.05.1997
(51) Int. Cl.: C08L 53/02, C08L 25/06

(54) **A block copolymer-based elastomeric composition**
Eine auf Blockcopolymerisat basierte elastomerische Zusammensetzung
Composition élastomère à base de copolymères-blocs

(30) Priority: 29.05.1996 EP 96303816
(43) Date of publication of application: 03.12.1997
(73) Proprietor: SHELL INTERNATIONALE RESEARCH MAATSCHAPPIJ B.V., 2596 HR Den Haag (NL)
(72) Inventor: Van Deursen, Josephus Hubertus, 1031 CM Amsterdam (NL); Hendriks, Petrus Anthonius Johannes Maria, 1031 CM Amsterdam (NL)

(56) References cited:
- EP-A- 0 318 793
- EP-A- 0 324 392
- EP-A- 0 324 397
- EP-A- 0 587 098
- EP-A- 0 643 102
- EP-A- 0 755 972
- WO-A-94/24206
- DE-A- 19 535 400

## Description

The present invention relates to an elastomeric composition comprising at least one block copolymer and a minor amount of a styrene-based polymer having a syndiotactic structure.

It is known to improve the heat resistance of polystyrene/elastomer block copolymers by blending them with a small amount of an engineering thermoplastic, e.g. polyphenylene ether (PPE) or a copolymer thereof. In EP 0 209 874 B1, for instance, it has been described that the heat resistance of styrene-butadiene-styrene block copolymers can be improved by blending these block copolymers with a small amount of polyphenylene ether.

Surprisingly, elastomeric compositions have now been found, which provide one or more advantages, in particular display an improved heat resistance when compared with the conventional polyphenylene ether-containing elastomeric compositions, by blending a major amount of a block copolymer with a minor amount of a styrene-based polymer having a syndiotactic structure. Moreover, it is observed that these elastomeric compositions which are highly homogeneous can be prepared more easily.

Accordingly, the present invention provides an elastomeric composition comprising i) at least one optionally hydrogenated block copolymer which comprises at least one poly(monovinylaromatic hydrocarbon) block and at least one poly(conjugated diene) block and ii) a styrene-based polymer having a syndiotacticity of 30% or more in terms of racemic pentad in an amount of less than 50% by weight, based on total elastomeric composition.

The poly(monovinylaromatic hydrocarbon) block is typically substantially amorphous, that is, contains less than 5% by weight, preferably 0% by weight, of polymer having a crystalline (syndiotactic) structure.

Styrene-based polymers having a syndiotacticity of 30% or more, are as such known and can be prepared by means of processes such as those described in EP 380968 B1 and EP 291536 B1.

The syndiotacticity of the styrene-based polymer is quantitatively determined by the well known ¹³C-NMR method. The tacticity as determined by the ¹³C-NMR method is indicated in terms of proportions of structural units continuously connected to each other, i.e. a pentad in which five structural units are connected to each other. The styrene-based polymer has a syndiotactic configuration such that the proportion in a pentad (racemic pentad) is at least 30%, preferably at least 50%, more preferably at least 80%, even more preferably at least 95%.

Preferably, the block copolymer(s) in accordance with the present invention comprise(s) at least two terminal poly(monovinylaromatic hydrocarbon) blocks and at least one internal poly(conjugated diene) block.

Preferred block copolymers are selected from the group consisting of those of the formulae A(BA)ₘ or (AB)ₙX, wherein A represents a block copolymer of predominantly poly(monovinyl aromatic hydrocarbon), wherein B represents a block of predominantly poly(conjugated diene), wherein X represents the residue of a multivalent coupling agent and wherein n represents an integer > 1, preferably 2 to 8, more preferably 2 to 6, in particular 2, 3 or 4, and m represents an integer ≥ 1, preferably 1 to 8, more preferably 1 to 4, in particular 1.

Preferred monovinyl aromatic hydrocarbon monomers for use in preparing the poly(monovinyl aromatic hydrocarbon) blocks A include stryene, alkyl-substituted styrene, alkoxy-substituted styrene, vinyl napthalene, and alkyl-substituted vinyl napthalene. More preferably, the monovinyl aromatic hydrocarbons are styrene and/or alkyl-substituted styrene, in particular styrene. The alkyl or alkoxy substitutents may typically comprise from 1 to 6 carbon atoms, preferably from 1 to 4 carbon atoms. The number of alkyl or alkoxy substituents per molecule, if present, may range from 1 to 3, and is preferably one.

Preferred conjugated diene monomers for use in preparing the poly(conjugated diene) blocks B include those conjugated dienes containing from 4 to 24 carbon atoms such as 1,3-butadiene, isoprene, piperylene, methylpentadiene, 2-phenyl-1,3-butadiene, 3,4-dimethyl-1,3-hexadiene, and 4,5-diethyl-1,3-octadiene. Preferred conjugated dienes are those containing from 4 to 12 carbon atoms, more preferably from 4 to 6 carbon atoms. Isoprene and butadiene are the most preferred conjugated diene monomers for use in the present invention because of their low cost and ready availability.

More preferably, the A blocks represent predominantly poly(styrene) blocks and the B blocks represent predominantly poly(butadiene) blocks, predominantly poly(isoprene) blocks or isoprene/butadiene copolymer blocks.

With the term "predominantly" in relation to block A is meant that the said block is mainly derived from a monovinylaromatic hydrocarbon monomer (e.g. styrene) and up to 20% by weight of another monovinylaromatic hydrocarbon monomer (e.g. α-methylstyrene), preferably up to 10% by weight; or up to 10% by weight of a conjugated diene monomer (e.g. butadiene and/or isoprene), preferably up to 5% by weight.

With the term "predominantly" in relation to block B is meant that the said block is mainly derived from a conjugated diene monomer or a mixture of two or more, preferably two, conjugated diene monomers and up to 10% by weight of a monovinylaromatic hydrocarbon monomer, preferably up to 5% by weight.

Multivalent coupling agents to be used include those commonly known in the art.

Examples of suitable multivalent coupling agents contain from 2 to 8, preferably 2 to 6, more preferably 2, 3 or 4 functional groups.

It has been found that the coupling efficiency to multivalent coupling agents having more than 3 functional groups can be rather low due to steric hindrance.

In order to avoid such steric hindrance when coupling the (AB)ₙ arms that on average at least one coupling site (functional group) of the multivalent coupling agent remains uncoupled to an AB arm, it may be desired to use AB arms wherein the end part of polymer block B to be coupled to the multivalent coupling agent is substantially linear. This end part, if present, typically constitutes not more than 5% by weight of the total polymer block B. Thus, if polymer block B is predominantly poly(isoprene), it may be desired that the end part to be coupled to the multivalent coupling agent consists of e.g. polybutadiene, which preferably has been polymerised in 1,4 fashion.

More preferably, the block copolymers contain pure poly(styrene), and pure poly(isoprene), pure poly(butadiene) blocks or copolymer blocks of isoprene and butadiene.

Optionally hydrogenated block copolymers comprising at least one poly(monovinylaromatic hydrocarbon) block and at least one poly(conjugated diene) block, are well known in the art and available commercially.

The block copolymers can be made by anionic polymerisation with an alkali metal initiator such as sec-butyllithium as disclosed for instance in U.S. 4,764,572, U.S. 3,231,635, U.S. 3,700,633, and U.S. 5,194,530.

The poly(conjugated diene) block(s) of the block copolymer may be selectively hydrogenated, typically a residual ethylenic unsaturation of at most 20%, more preferably at most 5%, and most preferably at most 2 % of its original unsaturation content prior to hydrogenation. Preferably, the block copolymers to be used in the compositions according to the invention are selectively hydrogenated. Hydrogenation may be effected selectively as disclosed in U.S. Patent Reissue 27,145. The hydrogenation of these polymers and copolymers may be carried out by a variety of well established processes including hydrogenation in the presence of such catalysts as Raney Nickel, noble metals such as platinum and the like, soluble transition metal catalysts and titanium catalysts as in U.S. Patent 5,039,755. The polymers may have different diene blocks and these diene blocks may be selectively hydrogenated as described in U.S. Patent 5,299,464.

Most preferably, the applied block copolymer has the structure ABA, wherein A has a weight average molecular weight in the range from 3000 to 100,000 g/mol, preferably from 5,000 to 40,000 g/mol and B has a weight average molecular weight in the range of from 10,000 to 250,000 g/mol, preferably in the range of from 40,000 to 200,000 g/mol.

The vinyl content of (hydrogenated) poly(butadiene) block(s) is preferably in the range from 25 to 75 mol%, more preferably 25 to 65 mol%, even more preferably 35 to 55 mol%. The vinyl content originates from 1,2 polymerisation rather than 1,4 polymerisation of butadiene.

The vinyl content of (hydrogenated) poly(isoprene) block(s) may vary within wide limits and is typically in the range from 0 to 75% mol, preferably 0 to 20% mol.

The block copolymer to be used according to the present invention, is normally containing polymerised vinyl aromatic monomers in an amount of from 10 to 60% by weight and preferably from 15 to 45% by weight.

The weight average molecular weight of the total block copolymer will normally be in the range of from 15,000 to 350,000 g/mol and preferably in the range of from 40,000 to 250,000 g/mol.

As examples of suitable block copolymers can be mentioned KRATON G-1651, KRATON G-1652, KRATON G-1702, KRATON G-1654, KRATON G-1657, KRATON G-1650, KRATON G-1701, KRATON D-1101, KRATON D-1102, KRATON D-1107, KRATON D-1111, KRATON D-1116, KRATON D-1117, KRATON D-1118, KRATON D-1122, KRATON D-1135X, KRATON D-1184, KRATON D-1144X, KRATON D-1300X, KRATON D-4141, KRATON D-4262, KRATON D-4240, KRATON D-1186 and KRATON D-4158 (KRATON is a trademark).

Since it is known that polymers having dissimilar backbone structures are poorly compatible (e.g. isotactic and atactic polypropylene), it is surprising to observe that the present elastomeric compositions are highly homogeneous and display such attractive heat resistance.

Suitably, the elastomeric compositions according to the present invention have a syndiotactic polystyrene/amorphous polystyrene weight ratio which is in the range from 0.2:1 to 2:1. Preferably, the syndiotactic polystyrene/amorphous polystyrene weight ratio is in the range from 0.5:1 to 1:1.

Suitably, the styrene-based polymer to be used in accordance with the present invention has a weight average molecular weight in the range of from 2,000 to 500,000 g/mol, preferably in the range of from 40,000 to 300,000 g/mol.

According to a further aspect, the present invention relates to compounds comprising the elastomeric composition and one or more additives known to those skilled in the art, such as polyolefins poly(conjugated diene) block-compatible tackifying resins, poly(monovinylaromatic hydrocarbon) block-compatible resins, fillers, stabilizers, and/or plasticisers.

Examples of suitable polyolefins include crystalline and elastomeric polyolefins.

In particular, preferred polyolefins include polyethylene, polypropylene, polybutylene, including ethylene copolymers, propylene copolymers and butylene copolymers. Blends of two or more of the polyolefins may be utilized.

The polyolefin can also be a metallocene polyolefin, that is a polyolefin produced with a metallocene catalyst, such as for example described in US patent specification Nos. 5,322,728 and 5,272,236.

Typically, metallocene polyolefins are copolymers of ethylene and 8 to 30% by weight of an α-olefin comonomer having from 4 to 12 carbon atoms.

In addition to, or instead of the above described polyolefins, one or more poly(conjugated diene) block-compatible tackifying resins may be used.

Examples of tackifying resins useful in the compositions of this invention include hydrocarbon resins, synthetic polyterpenes, rosin esters and natural terpenes. Preferably, the tackifying resins to be used are semi-solid or solid at ambient temperatures, and soften or become liquid, that is, have a ring and ball softening point (ASTM E 28-58T), at temperatures typically ranging from 70°C to 150°C, more preferably from 85°C to 120°C.

If the block copolymer is selectively hydrogenated, the tackifying resin is preferably hydrogenated as well.

Although generally not preferred, it may be desirable to include one or more poly(monovinylaromatic hydrocarbon) block-compatible resins in the compounds according to the present invention.

Such resins include coumarone-indene resins, polyalpha-methylstyrene resins, vinyl toluene-alpha-methyl styrene copolymers, and polyindene resins. For the purposes of this specification, the styrene-based polymer of the elastomeric composition of this invention is not regarded as a poly(monovinyl aromatic hydrocarbon) block-compatible resin.

A wide variety of fillers can be used including carbonates such as calcium carbonate, refractory oxides such as silica, titania, zinc oxide, silicates such as clays and talc, soot, graphite, and fibres such as glass fibres.

Examples of suitable plasticisers include petroleum-derived oils, synthetic oils such as oils prepared by a Fischer-Tropsch synthesis, olefin oligomers as well as vegetable and animal oil and their derivatives.

The petroleum derived oils which may be employed are relatively high boiling materials containing only a minor proportion of aromatic hydrocarbons (preferably less than 30% and, more particularly, less than 15% by weight of the oil). Alternatively, the oil may be totally non-aromatic.

Vegetable and animal oils include glyceryl esters of fatty acids and polymerisation products thereof.

The olefin oligomers are typically oligomers of C₂ to C₁₂ olefin monomers, preferably C₂ to C₆ olefin monomers. Examples of suitable olefin oligomers include poly(butylene), poly(dodecene), hydrogenated poly(isoprene), hydrogenated poly(butadiene), hydrogenated poly(piperylene) and hydrogenated copolymers of piperylene and isoprene. The olefin oligomers typically have weight average molecular weights in the range from 350 to 35,000 g/mol, preferably from 500 to 10,000 g/mol.

A variety of stabilizers are known to those skilled in the art and are commercially available.

The stabiliser, used in accordance with the practice of the present invention includes hindered phenol derivatives, hindered amine or triazine derivatives or phosphorous and/or sulphur-containing hindered compounds, or mixtures thereof.

Examples of suitable stabilizers are those disclosed in European patent specification No. 0659787.

Preferred representatives of stabilizers are pentaerythrityl-tetrakis(3,5-di-tert-butyl-4-hydroxy-hydrocinnamate) (IRGANOX 1010); octadecyl ester of 3,5-bis (1,1-di-methylethyl)-4-hydroxy benzene propanoic acid (IRGANOX 1076); 2,4-bis (n-octylthio)-6-(4-hydroxy-3,5-di-tert-butylanilino)-1,3,5-triazine (IRGANOX 565); 2-tert-butyl-6-(3-tert-butyl-2'-hydroxy-5-methylbenzyl)-4-methylphenyl acrylate (SUMILIZER GM); tris (nonylphenyl)phosphite; tris (mixed mono- and diphenyl)-phosphite; bis (2,4-di-tert-butylphenyl)-pentaerythritol diphosphite (ULTRANOX 626); distearyl pentaerythritol diphosphite (WESTON 618); styrenated diphenylamine (NAUGARD 445); N-1,3-dimethylbutyl-N'-phenyl-paraphenylenediamine (SUMILIZER 116 PPD); tris (2,4-di-tert-butylphenyl)phosphite (IRGAFOS 168); 4,4-butylidene-bis-(3-methyl-6-tert-butylphenol) (SUMILIZER BBMS); as well as epoxy resins such as EPON 1004 and dilaurylthiodipropionate (IRGANOX PS 800), or combinations thereof. IRGANOX, EPON, SUMILIZER, ULTRANOX, WESTON, NAUGARD and IRGAFOS are trade-marks.

Compounds according to the present invention typically will have the following composition.

| | |
|---|---|
| 100 parts | elastomeric composition according to the invention |
| 0-200 phr | plasticiser |
| 0-200 phr | polyolefin |
| 0-100 phr | poly(conjugated diene) block compatible tackifying resin |
| 0-100 phr | poly(monovinylaromatic hydrocarbon) block compatible resins |
| 0-200 phr | filler |
| 0.05-1.0 wt% | stabilizer |

phr = parts by weight per hundred parts by weight elastomeric composition.

The amount of plasticiser is preferably not more than 150 phr, in particular 0-50 phr. More preferably, the amount of plasticiser is at least 20 phr.

The polyolefin is preferably present in an amount from 0.1 to 100 phr, more preferably 1 to 50 phr.

The amount of poly(monovinylaromatic hydrocarbon) block-compatible resin is preferably not more than 20 phr, more preferably not more than 5 phr. Most preferably, the said resin as defined herein is absent from the compounds according to the present invention.

The amount of filler is preferably in the range from 10-200 phr, more preferably in the range from 20-150 phr.

The total amount of stabilizer(s) is preferably kept in the range of from 0.1 to 0.5 wt%.

The present elastomeric composition and compounds containing the said composition can suitably be prepared by solution-blending or, preferably, melt-blending at least one optionally hydrogenated block copolymer as defined hereinbefore with the styrene-based polymer, and any additional components. Suitable process conditions include those taught in the art. For melt-blending, suitably a temperature in the range of from 200°C to 320°C is applied.

Compounds according to the present invention may be used in a variety of applications, notably, automotive applications, in particular high temperature automotive applications, medical applications, applications in the construction industry, such as sealants, elastic tubes, films, cable insulation, and soft-touch applications.

Further, compounds according to the present invention may find use in applications where the compound is in indirect, or even direct, contact with food. Such applications include cap seals and liners for containers for beverages, especially for those beverages such as natural fruit juices where steam sterilization is required.

Compounds of the present invention are particularly beneficial in high temperature applications, that is typically in the range from 30 to 150°C, preferably from 40 to 125°C, more preferably 50 to 90°C.

Articles containing the compounds according to the present invention are typically prepared using well known injection-moulding techniques.

The present invention will now be illustrated by means of the following Examples.

### Example 1

An elastomeric composition (composition 1) in accordance with the present invention was prepared as follows.

### Step A

100 pbw of KRATON G-1654, a commercially available hydrogenated styrene-butadiene-styrene block copolymer (ex Shell), was pre-blended with 30 pbw of a polystyrene having a syndiotacticity of 98% in terms of racemic pentad and 0.5 pbw of Irganox 565 (ex Ciba Geigy; a phenolic antioxidant) at a temperature of 160 ° C during 3 minutes on a two roll mill which was applied at respective roller speeds of 10 rpm and 14 rpm.

### Step B

The pre-blend obtained under A) was then melt-blended at a temperature of 290 to 300 °C using an internal mixer (Brabender plasticorder) having a cup volume of 55 ml. The filling of the cup took 3 minutes at 20 rpm, whereafter the pre-blend was kneaded for 5 minutes at 100 rpm. Processability data of the composition so obtained are shown in Table 1.

### Step C

The compositon obtained under B) was then sheeted on a two-roller mill under similar conditions as applied under A).

### Step D

Subsequently test sheets (10 x 10 x 0.2 cm) were prepared by compression moulding the sheets obtained under C) for 3 minutes at 100 kN using a 500 kN hydrolic compression moulding press having a plate temperature of 270 °C. Then the test sheets were cooled to ambient temperature whilst a pressure of 100 kN was retained. The test sheets were then subjected to the ISO 2285-1981 procedure at temperatures of 23 °C and 70 °C respectively using Dumbbell type specimen (DIN 53 504, model S3A). The test severity was a 100% strain for 24 hours, and the tension set measurements were carried out 30 minutes after release of the sample strain. The tension set data of the test sheets of composition 1 are shown in Table 2. Tensile strain at break measurements were carried out with the test sheets of composition 1 using Dumbbell type specimen (DIN 53 504, model S3A) and a test speed of 200 mm/min. The data of strain at break of the test sheets of composition 1 are shown in Table 3.

### Example 2 (comparative)

For reasons of comparison a polyphenylene ether-containing elastomeric composition (composition 2) was prepared in a similar manner as described in Example 1, except that now polyphenylene ether (PPE 803; ex General Electric) was used instead of syndiotactic polystyrene. The various data of composition 2 are also shown in Tables 1-3.

**Table 1**

| Composition | Mass temperature °C | | Torque (Nm) | |
|---|---|---|---|---|
| | at start of kneading | at end of kneading | at start of kneading | at end of kneading |
| 1 | 237 | 291 | 40 | 22 |
| 2 | 236 | 302 | > 50 | 32 |

It will be clear from Table 1 that the present elastomeric composition (composition 1) displays an improved viscosity and processability (see the reduction in torque) when compared with the conventional PPE-containing elastomeric composition (composition 2). Moreover, the compoundability of composition 1 appears to be more attractive than that of composition 2 (see the lower mass temperature).

**Table 2**

| Composition | Tension set (%) | |
|---|---|---|
| | at 23 °C | at 70 °C |
| 1 | 20.6 | 66.8 |
| 2 | 76.3 | 92.0 |

It will be clear from Table 2 that the present elastomeric composition (composition 1) is more attractive than the conventional PPE-containing elastomeric composition (composition 2).

**Table 3**

| Composition | Strain at break (%) | | |
|---|---|---|---|
| | at 23 °C | at 70 °C | at 100 °C |
| 1 | 645 | 490 | 175 |
| 2 | 405 | 255 | 120 |

It will be clear from Table 3 that the present elastomeric composition (composition 1) displays an improved elasticity when compared with the conventional PPE-containing elastomeric composition (composition 2).

Summarizing it will be clear from the above that the present elastomeric composition constitutes clearly an improvement over a conventional PPE-containing elastomeric composition.

### Example 3

A compound containing the elastomeric composition, plasticiser, polypropylene, filler and stabilizers was prepared and compared with the same compounds, but containing polyphenylene ether or atactic polystyrene rather than syndiotactic polystyrene.

Table 4 gives the composition of the compounds prepared in parts by weight.

**Table 4**

| | Compound | | |
|---|---|---|---|
| | A | B | C |
| ingredients: | | | |
| Kraton G 1651 | 100 | 100 | 100 |
| s-PS | 45 | - | - |
| PPE 820 | - | 45 | - |
| a-PS (N5000) | - | - | 45 |
| Primol 352 | 170 | 170 | 170 |
| Durcal 5 | 100 | 100 | 100 |
| PP PM-6100 | 6 | 6 | 6 |
| Irganox 1010 | 0.2 | 0.2 | 0.2 |
| Irganox PS 800 | 0.8 | 0.8 | 0.8 |
| Epon 1004 | 1 | 1 | 1 |
| Kraton G1651 is a hydrogenated SBS block copolymer containing 30% weight styrene and is a commercially available product manufactured by Shell. a-PS N5000 is an atactic polystyrene, commercially available from Bredase Polystyreen Maatschappij, The Netherlands s-PS is a syndiotactic polystyrene as used in Example 1. PPE 820 is a Polyphenylene ether, commercially available from General Electric Co. Primol 352 is a plasticizer (extender oil) Durcal 5 is a CaCO₃ filler PP PM-6100 is a Polypropylene having a Melt Index of 5 g/10 min, commercially available from Montell Polyolefins Irganox 1010, Irganox PS800 and Epon 1004 are stabilisers | | | |

The compounds were prepared as follows:

### Step A : pre-blending of the components

A first preblend of Kraton G 1651 Rubber and Primol 352 was made. The oil was soaked into the rubber on a roller table by rolling overnight at room temperature. This first pre-blend was divided into 3 portions A, B and C and first pre-blend portions were compounded with the other ingredients of compounds A, B and C of Table 4, with the exception of polypropylene, on a two-roller mill under the same conditions as in Example 1. The products obtained are referred to as second pre-blends.

### Step B : melt blending of the components.

The second pre-blends obtained in step A were melt-blnded with polypropylene in the way as described in Example 1, but at a temperature of 280°C. Processability data of the compositions so obtained are shown in Table 5

**Table 5**

| Composition | Mass temperature °C | | Torque (Nm) | |
|---|---|---|---|---|
| | at start of kneading | at end of kneading | at start of kneading | at end of kneading |
| A | 170 | 286 | 6.3 | 3.2 |
| B | 193 | 291 | 7.9 | 3.4 |
| C | 180 | 286 | 4.7 | 2.8 |

It will be clear from Table 5 that the present elastomeric composition (composition A) displays an improved viscosity and processability (see the reduction in torque) when compared with the conventional PPE-containing elastomeric composition (composition B). Moreover, the compoundability of composition A appears to be more attractive than that of composition B (see the lower mass temperature).

It will however be appreciated that due to the relatively high oil concentration the viscosity of all compositions is significantly lower than the viscosity of the compositions of Table 1.

### Step C : sheeting of the compositions

The compositions of step B were sheeted as in step C of Example 1.

Subsequently, test sheets were prepared in the same manner as in step D of Example 1, but using a plate temperature of 200°C.

The tensile strength and strain at break of components A, B, and C were determined as described in Example 1. The results are reported in Tables 6 and 7.

**Table 6**

| Compound | Tensile strength (MPa) | | | | |
|---|---|---|---|---|---|
| | 23°C | 50°C | 70°C | 100°C | 125°C |
| A | 2.9 | 1.2 | 0.6 | 0.2 | 0.1 |
| B | 2.3 | 1.1 | 0.6 | 0.4 | 0.25 |
| C | 2.0 | 0.8 | 0.4 | 0.1 | 0.05 |

**Table 7**

| Compound | Strain at break (%) | | | | |
|---|---|---|---|---|---|
| | 23°C | 50°C | 70°C | 100°C | 125°C |
| A | 810 | 580 | 360 | 130 | 60 |
| B | 610 | 510 | 380 | 290 | 240 |
| C | 725 | 580 | 380 | 210 | 90 |

As can be seen from the Tables 6 and 7, compound A (according to the invention) compares favourably with compounds B and C (not according to the invention) in terms of strength and elasticity in the temperature range 23°C to 70°C. At higher temperatures, the addition of PPE (compound B) result in a better performance.

However, the formulation of the compounds has been optimized for PPE.

Whilst the best mode currently known to the inventors has been disclosed, it is contemplated that by further routine experimentation the compound containing syndiotactic polystyrene according to the present invention (compound A) can be further optimized, which may lead to further improvements in high temperature properties.

## Claims

1. An elastomeric composition comprising i) at least one optionally hydrogenated block copolymer which comprises at least one poly(monovinylaromatic hydrocarbon) block and at least one poly(conjugated diene) block and ii) a styrene-based polymer having a syndiotacticity of 30% or more in terms of racemic pentad in an amount of less than 50% by weight, based on total elastomeric composition.

2. A composition according to claim 1, wherein the block copolymer comprises at least two terminal poly(monovinylaromatic hydrocarbon) blocks and at least one internal poly(conjugated diene) block.

3. A composition according to claim 1 or 2, wherein the conjugated diene is butadiene and/or isoprene.

4. A composition according to any one of claims 1 to 3, wherein the monovinylaromatic hydrocarbon is styrene.

5. A composition according to any one of claims 1 to 4, wherein the block copolymer is hydrogenated in such a way that the residual ethylenic unsaturation in the poly(conjugated diene) blocks after hydrogenation is at most 5 %.

6. A composition according to any one of claims 1 to 5, wherein the styrene-based polymer has a syndiotacticity of 50% or more in terms of racemic pentad.

7. A composition according to any one of claims 1 to 6, wherein the syndiotactic polystyrene/amorphous polystyrene weight ratio is in the range from 0.2:1 to 2:1.

8. A compound comprising the elastomeric composition according to any one of the preceding claims and one or more additives selected from polyolefins poly(conjugated diene) block-compatible tackifying resins, poly(monovinylaromatic hydrocarbon) block-compatible resins, fillers, stabilizers and/or plasticisers.

9. Articles containing the elastomeric composition according to any one of claims 1 to 7.

10. Use of the compound according to claim 8 for high temperature applications in the range from 30 to 150°C.

## Patentansprüche

1. Elastomere Zusammensetzung, umfassend i) wenigstens ein gegebenenfalls hydriertes Blockcopolymer, das wenigstens einen Poly(monovinylaromatischer Kohlenwasserstoff)block und wenigstens einen Poly(konjugiertes Dien)block umfaßt, und ii) ein Polymer auf Styrolbasis mit einer Syndiotaktizität von 30% oder darüber, ausgedrückt als racemische Pentade, in einer Menge von weniger als 50 Gew.-%, bezogen auf die gesamte elastomere Zusammensetzung.

2. Zusammensetzung nach Anspruch 1, worin das Blockcopolymer wenigstens zwei endständige Poly(monovinylaromatischer Kohlenwasserstoff)blöcke und wenigstens einen inneren Poly(konjugiertes Dien)block umfaßt.

3. Zusammensetzung nach Anspruch 1 oder 2, worin das konjugierte Dien Butadien und/oder Isopren ist.

4. Zusammensetzung nach einem der Ansprüche 1 bis 3, worin der monovinylaromatische Kohlenwasserstoff Styrol ist.

5. Zusammensetzung nach einem der Ansprüche 1 bis 4, worin das Blockcopolymer derart hydriert ist, daß die restliche ethylenische Unsättigung in den Poly(konjugiertes Dien)blöcken nach der Hydrierung höchstens 5% beträgt.

6. Zusammensetzung nach einem der Ansprüche 1 bis 5, worin das Polymer auf Styrolbasis eine Syndiotaktizität von 50% oder darüber, ausgedrückt als racemische Pentade, aufweist.

7. Zusammensetzung nach einem der Ansprüche 1 bis 6, worin das Gewichtsverhältnis syndiotaktisches Polystyrol/amorphes Polystyrol im Bereich von 0,2:1 bis 2:1 liegt.

8. Compound, umfassend die elastomere Zusammensetzung nach einem der vorstehenden Ansprüche und ein oder mehrere Additive, ausgewählt unter Polyolefinen, mit dem Poly(konjugiertes Dien)block verträglichen klebrigmachenden Harzen, mit dem Poly(monovinylaromatischer Kohlenwasserstoff)block verträgtlichen Harzen, Füllstoffen, Stabilisatoren und/oder Weichmachern.

9. Gegenstände, die die elastomere Zusammensetzung nach einem der Ansprüche 1 bis 7 enthalten.

10. Verwendung des Compounds nach Anspruch 8 für Hochtemperaturanwendungen im Bereich von 30 bis 150°C.

## Revendications

1. Composition élastomère comprenant i) au moins un copolymère bloc éventuellement hydrogéné qui comprend au moins un bloc de poly(hydrocarbure monovinylaromatique) et au moins un bloc de poly(diène conjugué) et ii) un polymère à base de styrène ayant une syndiotacticité de 30% ou plus en termes de pentad racémique en une quantité inférieure à 50% en poids, par rapport à la composition élastomère totale.

2. Composition suivant la revendication 1, dans laquelle le copolymère bloc comprend au moins deux blocs de poly(hydrocarbure monovinylaromatique) terminaux et au moins un bloc de poly(diène conjugué) intérieur.

3. Composition suivant l'une et l'autre des revendications 1 et 2, dans laquelle le diène conjugué est du butadiène et/ou de l'isoprène.

4. Composition suivant l'une quelconque des revendications 1 à 3, dans laquelle l'hydrocarbure monovinylaromatique est du styrène.

5. Composition suivant l'une quelconque des revendications 1 à 4, dans laquelle le copolymère bloc est hydrogéné d'une manière telle que l'insaturation éthylénique résiduelle dans les blocs de poly(diène conjugué) après hydrogénation est de tout au plus 5%.

6. Composition suivant l'une quelconque des revendications 1 à 5, dans laquelle le polymère à base de styrène a une syndiotacticité de 50% ou plus en termes de pentad racémique.

7. Composition suivant l'une quelconque des revendications 1 à 6, dans laquelle le rapport en poids de polystyrène syndiotactique/polystyrène amorphe se situe dans la gamme de 0,2/1 à 2/1.

8. Composé comprenant la composition élastomère suivant l'une quelconque des revendications précédentes et un ou plusieurs additifs choisis parmi les polyoléfines, les résines assurant un collage compatibles avec les blocs de poly(diène conjugué), les résines compatibles avec les blocs de poly(hydrocarbure monovinylaromatique), les charges, les stabilisants et/ou les plastifiants.

9. Articles contenant la composition élastomère suivant l'une quelconque des revendications 1 à 7.

10. Utilisation du composé suivant la revendication 8 pour des applications à des températures élevées allant de 30 à 150°C.
